# EUROPEAN PATENT APPLICATION

(11) **EP 0 910 965 A1**
(43) Date of publication of application: **28.04.1999**
(21) Application number: 97915491.1
(22) Date of filing: 02.04.1997
(51) Int. Cl.: A43B 9/12, A43B 13/32, A43D 25/20, C09J 7/02

(54) **PROCESS FOR ADHESIVE BONDING THE SOLE TO THE CUT PART IN THE SHOE MAKING INDUSTRY, AND LEATHER MATERIALS**

(30) Priority: 03.04.1996 ES 9600792; 01.04.1997 ES 9700669
(71) Applicant: ASOCIACION DE INVESTIGACION PARA LA INDUSTRIA DEL CALZADO Y CONEXAS ( INESCOP), E-03600 Elda (Alicante) (ES)
(72) Inventor: MALDONADO MILLAN, Fernando, E-03540 Playa S. Juan (ES); ALMELA ALARCON, Mariano, E-03201 Elche (ES); ESCOTO PALACIOS, Maria José, E-03004 Alicante (ES)
(74) Representative: De Arpe Fernandez, Manuel
(86) International application number: ES9700084
(87) International publication number: WO9737555

(57) **Abstract**

Process for adhesive bonding the sole to the cut part of a shoe, and Morocco-leather materials, characterized by application to one of the two surfaces to be joined of a solid adhesive which is heat activated, and immediately after the two surfaces are joined and subjected to pressure during a time preferably not lower than 30 seconds. The solid adhesives are preferably applied as a continuous or perforated sheet having a thickness varying between 30 and 150 µm. Said products are of the thermoplastic type and are basically comprised of polymers of the polyurethane, polyamide and/or polyester type.

## Description

The present invention relates to the bonding of the sole to the upper in footwear, and leather goods materials, using solid thermoplastic adhesives in continuous or perforated filmic form.

The traditional bonding method in the footwear industry involves applying the adhesive to the contact surface of both the sole and the upper, and producing a bond between both surfaces under pressure. A similar method is used in the leather goods industry.

The efficiency of such processes can be measured both in the improvement of the development of the products (shoes and leather goods) and by the demands of time, cost, space, safety, etc of the manufacturing operations.

Neoprene-based adhesives provide satisfactory results with the traditional bonding method but, being solvent-based, they present new problems regarding solvent removal, including more time required to complete the process, environmental problems and undesirable working conditions.

Polyurethane-based adhesives, although inherently compatible with a wider range of materials, also initially posed the problem of organic solvent use.

The adhesives based on neoprene and/or polyurethane polymer water emulsions cause less environmental problems, but their industrial application is difficult because of their limited versatility and because processes which use this type of adhesive take more time. Moreover, the total harmlessness of this product has not been proved.

100% solid adhesives are another alternative for bonding the sole to the upper in footwear. For a solvent-free solid adhesive to be suitable for bonding the sole to the upper in footwear, the following properties are desirable. The solid adhesive must be applied in conditions which allow an adequate wetting of the surfaces of the materials to be joined, and which preferably also allow penetration in fibrous materials, for example leather. The application temperatures must not be excessively high, for example no more than 150°C, and the heating method must be sufficiently fast and efficient to prevent the materials from being affected by the heat, and the people handling them from burning their skin. It is also desirable that the adhesive bond between the sole and the upper has sufficient initial resistance to prevent the edges of the sole from becoming unstuck during the later handling of the shoe after pressing. At the same time, to ensure the normal conditions of use of the shoe, it must achieve a bonding resistance of at least 5N/mm in an unbonding test carried out 72 hours after pressing the sole.

Finally, the adhesive bond must be sufficiently heat resistant, in accordance with the Standard BS-5131 Section 1.7.

A first type of solid adhesives developed for the bonding of the sole to the upper in footwear is moisture-curable solvent-free reactive adhesives. The main characteristics of these products are: i) monocomponent character, ii) absence of solvents, which eliminates environmental problems, undesirable work conditions and the drying times necessary for conventional adhesives, iii) high crystallisation rate, iv) adequate heat resistance, v) compatibility with different substrata, vi) if they are packed hermetically they can be stored for more than a year, vii) composition contains prepolymers with groups of free isocianate and diisocianate free monomers for which they may have a harmful character and require relatively complex application methods. In general the application of these moisture-curable adhesives is carried out in the following stages: i) preparing the contact surface of the sole for the application of the adhesive and applying adhesive thereto, ii) preparing the contact surface of the upper for the application of the adhesive and applying adhesive thereto, and iii) after a time delay, bringing the two contact surfaces together and applying pressure to produce the bond.

One such method is described in the patent GB 1540634. More particularly, this specification describes a method for bonding the sole to the upper in footwear, using a urethane prepolymer composition which is provided as a fluid composition, and which is convertible, by a chain extension treatment (curing), to a polyurethane which, when heated, is tacky and capable of forming immediate and substantially strong adhesive bonds. The curing of this composition preferably takes place by the application of heat and moisture, which demands the use of specific equipment, handling of the various components, and consequently more manpower, as well as additional time for the process as a whole.

Patent GB 2137638 describes and claims another moisture- curable solvent-free adhesive, comprising polyurethane pre-polymers, and also claims its use in bonding the sole to the upper in footwear. However, the application process of this product requires several relatively complex stages with a high total consumption of time and labour.

In a later development (EP 223562) another method is described for bonding the sole to the upper in footwear using a moisture-curable solvent-free adhesive. In this method, the curing process of the adhesive applied onto the upper is modified in such a way that it is possible to eliminate the heat activation stage before producing the adhesive bond, but the heat activation of the adhesive applied to the soling material is still necessary. The patent EP 381897 claims another composition of a moisture-curable solvent-free adhesive, particularly suitable for the bonding of leather with a high free fatty acid content, and also claims the application method for this adhesive.

In general this series of moisture-curable solvent-free adhesives, has two disadvantages which make their application difficult in sole-upper bonding in the footwear manufacturing process; the complexity of their handling, which demands the use of expensive specific equipment, additional labour and a high consumption of time in the process; and its harmful character in relation to its content of diisocianate free monomers.

The aim of the present invention is to use another type of solid adhesive of a thermoplastic nature which does not have reactive sites, in the form of a continuous or perforated film with controlled thickness, free from solvents and monomers in their composition, for the bonding of the sole to the upper in the footwear and leather goods industry. As well as it not being necessary to eliminate the solvents or water once they are applied, these adhesives present a series of interesting advantages in terms of their application in footwear-leather goods, such as:
- Good stability during their storage and superior to all the known adhesives due to being solvent free and to their non-reactivity.
- They do not need special sealed packaging, as do the moisture-curable solid adhesives.
- They do not cause any problems for the disposal of the packaging, as do the solvent-based adhesives and the reactive solid adhesives.
- There are no potential risks in the storage of these adhesives.
- The bonding operations are simple and rapid, reducing the adhesive application, reactivation and pressing times by 35%, and reaching the maximum bonding values within a few minutes after pressing, with thermal resistance (creep) similar to conventional adhesives.
- They allow an application located in the bonding area, cleaner and more precise than other conventional adhesives.
- They do not need to be cured after their application.
- The thickness of the adhesive coat can be regulated according to the production requirements, thus saving material, using about 10 times less than any other adhesive.
- The wrapping paper or cardboard as well as the offcuts can be directly recycled.
- They can be adapted easily to a continuous manufacturing process and its use favours the automation of the whole process.

Another aim of the present invention is to provide a method for bonding the sole to the upper in footwear and leather goods materials by using solid thermoplastic adhesives based on polyurethane, polyamide and/or polyester type polymers.

In accordance with the present invention, a method is provided for bonding the sole to the upper in footwear, in which a 100% solid thermoplastic adhesive, for example polyurethane, in film form (between 30 and 150 µm thick), is fixed either to the surface of the sole or the upper, under simultaneous application of pressure (0.2 to 0.6 MPa) and temperature (between 80 and 250°C) for no longer than 30 s. Next the surface of the sole and/or the upper, to which the adhesive has been applied, is heated by exposure to infra-red lamps until it reaches a temperature of between 90 and 120°C. The exposure time depends on the configuration of the heating system and the nature of the soling and/or upper materials, but usually ranges between 2 and 15 s. In order to avoid premature cooling of the adhesive, the other surface is also heated slightly (to between 70 and 90°C), before the sole and upper are placed in contact and pressed with the adhesive between them. Pressing takes place immediately after heat activation and preferably in less than 30s. The pressure applied depends on the characteristics of the materials and these are kept under pressure for preferably between 5 and 40s.

The conditions for fixing the solid adhesive to the sole and/or the upper must allow an adequate wetting of the material, and will depend on the previous treatment to which they have been subjected. When the leather upper is prepared by a chemical treatment which eliminates or simplifies conventional scouring/roughing, as described in the European patent application EP 508929, the conditions for fixing the solid adhesive can be simplified, and the adhesive can equally be fixed to the leather upper or the soling material to which it is going to be bonded.

When the leather upper is prepared by conventional scouring/roughing it is preferable that the solid adhesive is fixed to the leather upper by the simultaneous application of pressure (0.2 to 0.6 MPa) and temperature (no less than 120°C) for no more than 30 s.

The solid adhesive can be applied on the sole material when the upper leather is prepared by conventional scouring/roughing and a solvent-based or water-based primer is applied, like those used in the normal bonding methods.

The solid adhesive films can be supported by silicone paper, a polyethylene sheet or similar nonadherent compound. During the fixation stage the adhesive faces onto the soling or upper material and the release paper will remain facing the heater element ensuring that it does not become stuck to it. Once the adhesive is fixed, the release paper can be removed when the adhesive is going to be activated by heat, which can be carried out immediately after its fixation, or some time after if desired, depending on the demands of the manufacturing process.

The soling materials will be prepared for bonding by the conventional treatments suited to each case. When vulcanized rubber, thermoplastic rubber or ethylvinylacetate (EVA) are used as soling materials, they will be prepared by a physical treatment involving exposure to ultra-violet light, as described in the patent EP 285273. This will avoid the use of halogenating solutions and conventional solvent-based primers with a highly contaminant character.

The solid adhesives will be applied to the sole or the upper in filmic form, with a thickness ranging between 30 and 150 µm. To ensure surface wetting, pressure (between 0.2 and 0.6 MPa) will be applied simultaneously with heat (between 80 and 250°C) for no longer than 30 s. The fixation conditions will depend on the homogeneity of the surface, mainly of the upper material.

When the upper material shows a high level of homogeneity, either because it is a synthetic which does not need scouring or because it is a leather which has been subjected to a chemical treatment as described in the patent EP 508929, or maybe because it has been scoured/roughed by a conventional process and a water or solvent-based primer has been subsequently applied, the solid adhesive can be fixed on the soling material; in this case, an adequate wetting of the material can be achieved by applying a pressure of between 0.2 and 0.4 MPa and a temperature of between 80 and 120°C, for no more than 15 s. The fixation on the soling material can be done during the pre-manufactured stage of the sole, and introduced into the production chain with the adhesive already fixed, protected by release paper, and ready for the activation stage and later bonding to the upper material.

When the upper material has a high surface heterogeneity, either because it is leather or synthetic which has been prepared by scouring-roughing, it is recommended that fixation be carried out on the upper material, ensuring its adequate wetting by simultaneously applying a pressure of between 0.2 and 0.6 MPa, and a temperature between 120 and 250°C for no more than 30 s. This treatment will be carried out using a conventional press, adapting to it a mould or element heated by electrical resistance, thermal oil or by electromagnetic induction. This mould or surface will have a break and shape similar to the sole or it will be constructed in such a way that when applying pressure on it, it will elastically deform so as to adapt itself to the shape and break of the last bottom and to allow the adhesive to be homogeanically fixed to the upper. The adhesive film, with a thickness preferably between 30 and 150 µm, is placed with the release paper facing the mould and the adhesive facing the upper, which will be conveniently mounted on its last. Next, the assembly is pressed, regulating the pressure, temperature of the mould and time of pressing in the afore-mentioned way, so that an effective fixation of the adhesive is produced on the leather of the upper.

Once the solid adhesive is fixed by any of the previously described procedures either on the sole or on the upper material, the release paper is removed and the adhesive is heat reactivated using a conventional method of exposure to infra-red lamps. The surface temperature of the material should preferably reach between 90 and 120°C, for which, depending on the activation method and the materials, an exposure time of 2 to 15 s can be used. The activation of the adhesive may also take place at the same time as the fixing. The simultaneous heating of the upper or soling material to which the adhesive has not been fixed is also recommended, to a temperature between 70 and 90°C. Next, the sole and upper are placed together, with the adhesive between them, and immediately pressed, and preferably in less than 30s. The pressure applied will depend on the characteristics of the materials, and these will be maintained under pressure for preferably between 5 and 40s.
The adhesive can also be fixed on the sole and the upper without a release paper, cutting it to fit the shape of the base of the sole or upper, then placing it on these. Heat is applied gradually in an oven until a temperature of between 90 and 120°C has been reached in a time preferably longer than 1 minute. If it is necessary, it is recommended that the adhesive can be fixed previously applying heat to one or two specific points. In both cases it is possible to proceed to a conventional reactivation of the adhesive using infra-red lamps as aforementioned, or to apply hot air under pressure at a temperature between 200 and 300°C to the element where the adhesive is fixed for preferably no less than 5s, producing its reactivation in this way. The simultaneous heating of the upper or sole material, on which the adhesive has not been fixed, to a temperature of between 70 and 90°C is also recommended. The pressing stage is carried out as described previously.

The activation and pressing stage can be carried out simultaneously using presses with a high frequency adapted heating system, with a power preferably between 30 and 50 W/cm². In these conditions the soling and upper material are pressed with the adhesive between them and the high frequency system is simultaneously activated to heat the adhesive for between 1 and 6 s. The pressure is then maintained for preferably no more than 60 s, and the bond is consolidated.

By using solid thermoplastic adhesives of either polyurethane, polyester and/or polyamide, preferably in filmic form with a thickness of between 30 and 150 µm, and following the procedures previously described, stable bonds can be obtained between footwear soling and upper materials, and between leather goods materials. The procedures described are simple and easy to apply in a production process, and their use can mean an estimated reduction of more than 35% in process times, a reduction in labour and the elimination of solvents and other dangerous compounds, like diisocyianate monomers, from the bonding process.

In order to understand the invention better, detailed descriptions follow of some examples of bonding processes.

### EXAMPLE 1:

The contact surface of a PVC sole, being the surface to be bonded to the corresponding surface of the upper, is wiped with a methyl ethyl ketone solvent.

The shoe to which the sole will be bonded has a leather upper which has been previously lasted. The lasting allowance on the last bottom is subjected to a conventional scouring/roughing operation, for example using a machine as described in EP-43645. An adhesive film is then applied, of polyurethane 100 µm thick composed of a mixture of polyesterurethane polymer with different molecular weights and melting points, and homogenising agents for the mixture, to the scoured area of the leather upper. The upper is pressed on a rectangular sheet of solid adhesive with silicone release paper, which covers the whole base of the last and which was previously placed on a mould heated to a temperature of 200°C by an electromagnetic induction system provided by a 1kW powered feeding source which generates a sinusoidal altern current with a frequency of 10 kHz. In the aforementioned system a spiral coil and a condenser are included to compensate for the reactive impedance which is produced; eventually the coil and condenser can be cooled by a closed circuit of water or by air. The supporting paper of the adhesive sheet faces the mould and the adhesive faces the upper, and a pressure of 0.3 MPa is applied for 5 s. The excess adhesive film is then removed.

Once the adhesive has been fixed to the upper, the operator who has already prepared the PVC sole, as indicated before, removes the release paper from the adhesive and introduces the sole and the upper to an independent heat activation unit where both materials are subjected to heating by exposure to infra-red lamps. The distance from the lamps and the exposure time are set so that on the surface of the upper, where the adhesive is fixed, a temperature of about 110°C is reached, and about 80°C on the surface of the sole.

Next, the sole and the upper are faced together with the adhesive between them and are immediately pressed. The pressing method can be the one normally used in manufacturing, for example the one described in GB-2042868. The pressure applied depends on the material's characteristics, and is maintained for 30 s.

### EXAMPLE 2:

In this case a generally similar method is followed as in the case of Example 1 above, except that in this case the sole is made of vulcanized rubber whose surface is prepared for bonding by a conventional halogenation operation.

### EXAMPLE 3:

In this case the method followed is generally similar to Example 1, except that in this case the sole is made from thermoplastic rubber whose surface is prepared for bonding by a conventional halogenation operation.

### EXAMPLE 4:

The method followed is generally similar to Example 1, except that in this case the sole is made from ethylvinylacetate (EVA) and is prepared by scouring and a conventional neoprene primer is applied.

### EXAMPLE 5:

The method followed is generally similar to Example 1, and with the soling materials used in Examples 2, 3 and 4, but in this case they are prepared for bonding by exposure to ultra-violet light. In general, before exposure to ultra-violet light, priming is not required, although if necessary a solution of benzophenone at 1 % in methyl ethyl ketone, which acts as a photosensitizer, can be applied.

### EXAMPLE 6:

The method followed is generally similar to Example 1, except that the sole is made of polyurethane and is prepared by mechanical roughing. In general, priming is not required, but a conventional polyurethane based primer can be applied.

### EXAMPLE 7:

The method followed is the same as in Example 6, except that the sole is made of leather.

### EXAMPLE 8:

The method followed is generally similar to Example 1, except that in this case the upper is made of synthetic material which is also prepared by mechanical scouring-roughing.

### EXAMPLE 9:

The method followed is generally similar to the examples 1 to 8, except that in this case the mould used for the fixing of the adhesive to the upper is heated by a direct electric current with 35 amps intensity. The mould surface will be coated with a thin layer of calibrated resistance stainless steel. The system includes a current transformer which has been designed to generate the required current intensity and to help the heating of the mould, and it includes a triac valve to control the system so as to reach the desired temperature on the mould surface.

### EXAMPLE 10:

The method followed is generally similar to that in examples 1 to 9, except that in this case the thermal activation of the adhesive is produced at the same time as it is being fixed, using a heated mould. When heating the sole at the same time as the adhesive is being fixed to the upper, it is possible to produce the sole-upper bond immediately afterwards.

### EXAMPLE 11:

The shoe to which the sole will be bonded has a leather upper which has previously been fixed on a last. The lasting allowance on the last bottom is subjected to a treatment as described in the patent EP 508929.

The contact surface of a PVC sole, being the surface which will be bonded to the base of the upper, is wiped with a MEK solvent. Next, a solid adhesive film (for example polyurethane 100 µm thick, as described in Example 1) with a silicone release paper, is fixed by mechanical pressing or even manually using an iron or metallic roller heated to a temperature of 100°C. The adhesive film faces the surface of the sole, and a pressure of 0.3 MPa is applied to the release paper of the adhesive film for 10 s. This operation can be carried out during the premanufacturing process of the sole, and introduced into the chain with the adhesive already fixed and protected by the release paper.

Once the adhesive has been fixed to the sole, the operator who has already prepared the upper, as indicated before, removes the release paper from the adhesive and introduces the sole and the upper to an independent heat activation unit where both materials are subjected to heating by exposure to infra-red lamps. The distance from the lamps and the exposure time are set so that the surface of the sole, where the adhesive is fixed, reaches a temperature of about 110°C, and on the surface of the upper, the temperature is about 80°C.

The procedure continues in the same way as described in Example 1.

### EXAMPLE 12:

In this case a generally similar method is followed to Example 11 above, except that in this case the sole is made of vulcanized rubber whose surface is prepared for bonding by a conventional halogenation operation.

### EXAMPLE 13:

In this case the method followed is generally similar to Example 11, except that in this case the sole is made from thermoplastic rubber whose surface is prepared for bonding by a conventional halogenation operation.

### EXAMPLE 14:

The method followed is generally similar to Example 11, except that in this case the sole is made from ethylvinylacetate (EVA) and is prepared by scouring and a conventional neoprene primer is applied.

### EXAMPLE 15:

The method followed is generally similar to Example 11, and with the soling materials used in Examples 12, 13 and 14, but in this case they are prepared for bonding by exposure to ultra-violet light. In general, before exposure to ultra-violet light, priming is not required, although if necessary a solution of benzophenone at 1 % in methyl ethyl ketone, which acts as a photosensitizer, can be applied.

### EXAMPLE 16:

The method followed is generally similar to Example 11, except that the sole is made of polyurethane and is prepared by mechanical roughing. In general priming is not required, but a conventional polyurethane-based primer can be applied.

### EXAMPLE 17:

The method followed is the same as in Example 16, except that the sole is made of leather.

### EXAMPLE 18:

The method followed is generally similar to that of examples 11 to 17, except that in this case the upper leather is prepared by conventional scouring/roughing and a solvent-based primer is applied.

### EXAMPLE 19:

The method followed is the same as in Example 18, except that in this case a water-based primer is applied.

### EXAMPLE 20:

The method followed is generally similar to Example 11, except that in this case the composition of the solid adhesive is polyamide and the thickness of the film is 30 µm.

### EXAMPLE 21:

The method followed is the same as in Example 20, except that the adhesive has a polyester-based composition.

### EXAMPLE 22:

The method followed is the same as in the previous examples, except that in this case the activation of the adhesive is carried out by a high frequency system at the same time as the sole is pressed to the upper with the adhesive between them.

### EXAMPLE 23:

A solid adhesive, for example of the polyurethane type, in filmic form with a thickness of 50 µm, is fixed on the flesh side of a leather used for leather goods, by a process similar to that described in Example 11. Next this leather is bonded to another leather goods material (leather, textile lining or synthetic) using an available hemming machine, which presses the two surfaces with the adhesive between them, applying a temperature of 100°C for 15s.

### EXAMPLE 24:

The method followed is generally similar to examples 1 to 9, except that in this case the adhesive, without release paper, is cut to a size and shape to fit the base of the last where the upper is lasted. The adhesive is previously fixed on to the bottom of the last applying heat in two points with forced hot air and it is fixed by passing it through an oven in such a way that the temperature on the surface of the adhesive is gradually increased at 50°C/min between room temperature and 100°C. The adhesive is reactivated at the same time as it is fixed, applying a curtain of forced hot air at a temperature of 200°C for 10s, then the procedure continues following the method described in example 10.

### EXAMPLE 25:

The method followed is generally similar to the examples 11 to 19, except that in this case the adhesive, without release paper, is cut to a size and shape to fit the base of the sole. The adhesive is previously fixed on to the sole applying heat in two points with forced hot air and is fixed by passing it through an oven in such a way that the temperature on the surface of the adhesive is gradually increased at 50°C/min between room temperature and 100°C.

## Claims

1. A procedure for bonding the sole to the upper in footwear, characterised by using polyurethane, polyamide and/or polyester type solid adhesives, in continuous or perforated filmic form, with or without non-adherent release paper, preferably with a thickness between 30 and 150 µm, which is fixed on the sole or the upper. Both surfaces are heat activated and pressed with the adhesive between them, characterised by the fact that pressing takes place immediately after heat activation, and preferably in less than 30 s.

2. A procedure according to claim 1, characterised in that the sole and/or upper of the shoe is subjected to a pre-treatment before application of the solid adhesive.

3. A procedure according to claims 1 and 2 characterised in that the polyurethane type solid adhesive film with a thickness between 100 and 150 µm is fixed to the lasting allowance of the upper previously subjected to scouring/roughing, simultaneously applying pressure (between 0.2 and 0.6 MPa) and temperature (between 120 and 250°C) for no more than 30 s.

4. A procedure in agreement with claim 3, characterised in that the solid adhesive film is placed on a mould of a size and shape similar to the sole. It is heated by electromagnetic induction, with the release paper facing the mould, and the upper, fixed on its last, is pressed on the adhesive film placed on the mould.

5. A procedure in agreement with claims 3 and 4, characterised in that the mould is heated by an electrical resistance system.

6. A procedure in accordance with claims 3 and 4, characterised in that the mould is heated by a thermal oil circuit.

7. A procedure in agreement with claim 3, characterised by the use of the system which applies forced hot air to fix the adhesive to the upper lasting allowance.

8. A procedure in accordance with the previous claims, characterised in that the adhesive is fixed on a synthetic material upper having been subjected or not to a previous scouring-roughing.

9. A procedure in agreement with claims 1 and 2, characterised in that the leather of the upper is subjected to a treatment as described in the patent EP 508929, and the polyurethane type solid adhesive film with a thickness preferably between 50 and 150 µm is fixed to the sole material which is going to be bonded to the upper, by pressing (between 0.2 and 0.4 MPa) with a press heated by electromagnetic induction, electrical resistances or thermal oil, at a temperature preferably between 80 and 100°C. Pressing is carried out on the supporting material and the adhesive faces the surface of the sole.

10. A procedure in agreement with claim 9, characterised in that the upper leather is submitted to a conventional scouring/roughing process, with subsequent application of a solvent-based primer.

11. A procedure in agreement with claim 10, characterised in that the primer applied on the upper is a water-based primer.

12. A procedure as described in claim 9, characterised in that the solid adhesive is of the polyamide type with a film thickness preferably between 20 and 60 µm and a fixation temperature on the sole preferably between 100 and 120°C.

13. A procedure as described in claim 9, characterised in that the solid adhesive is of the polyester type with a film thickness preferably between 20 and 60 µm and a fixation temperature on the sole preferably between 100 and 120°C.

14. A procedure as described in claims 9,10,11,12 and 13, characterised in that the adhesive films are fixed to the sole by manual pressing, using an iron or a heated metallic roller.

15. A procedure according to the claims 9, 10, 11, 12 and 13, characterised by using a method which applies forced hot air to fix the adhesive to the sole.

16. A procedure according to claims 1 and 8, characterised in that the upper, with the adhesive fixed and release paper removed, is reactivated by exposure to infra-red lamps to a temperature preferably between 90 and 120°C and the sole is warmed up by the same method to a temperature preferably between 70 and 90°C. Immediately after, and preferably in less than 30 s, both surfaces are pressed with the adhesive between them, applying a pressure which depends on the nature of the materials, for preferably between 5 and 40s.

17. A procedure according to the claims 1 to 8, characterised in that the adhesive is simultaneously activated when being fixed to the upper, and immediately after it is pressed on to the sole, conveniently reactivated, according to what is expressed in the previous claim.

18. A procedure according to claims 1, 2, 9, 10, 11, 12, 13, 14 and 15, characterised in that the sole with the adhesive fixed and release paper removed is reactivated by exposure to infra-red lamps until a temperature preferably between 90 and 120°C has been reached and the upper is reactivated by the same method to a temperature preferably between 70 and 90°C. Immediately after, and preferably in less than 30s, both surfaces are pressed with the adhesive between them, applying a pressure which depends on the nature of the materials, for preferably between 5 and 40s.

19. A procedure according to the claims 1, 2, 9, 10, 11, 12, 13, 14 and 15, characterised in that the adhesive is simultaneously activated when fixed to the sole, and immediately after it is pressed to the conveniently warmed up upper, as expressed in the previous claim.

20. A procedure according to claims 1 to 15, characterised in that the sole and the upper, with the adhesive between them, are pressed and the adhesive simultaneously activated by a high frequency system during a time preferably between 1 to 6 s, and the pressure is maintained for preferably no more than 30s.

21. A procedure for the bonding of leather goods materials characterised by using polyurethane, polyamide and/or polyester type solid adhesives, in filmic form preferably with a thickness between 30 and 100 µm, which is fixed to one of the materials to be joined. They are bonded by the simultaneous application of heat and pressure in the hemming machines or similar ones available for use, preferably to a temperature below 100°C for between 7 and 15 s.

22. A procedure according to some previous claims, characterised by using the solid hot-melt adhesive in the form of a film with the composition compatible to the materials used in footwear and leather goods industry.

23. A procedure according to claims 1 and 2, characterised because the film of solid adhesive of a polyurethane type, without release paper and with a thickness of between 50 and 150µm, is fixed on the bonding margin of the upper, applying heat gradually in a preferably open oven until a temperature of between 90 and 120°C is reached. If it is necessary, it is recommended to fix the adhesive film previously applying heat to one or various points. As necessary, hot forced air is applied or not. Next, it is possible to bond the sole following some of the procedures described in claims 16 or 17.

24. A procedure as described in claims 1 and 2, characterised by the film of solid adhesive, without release paper, which is fixed on to the sole gradually applying heat in a preferably open oven until a temperature of between 90 and 120°C is reached. If it is necessary, it is recommended to fix the film of adhesive previously by applying heat to one or two points. As necessary, forced hot air is applied or not. Next, it is possible to bond the upper following some of the procedures described in claims 18 or 19.
